# EUROPEAN PATENT SPECIFICATION

(11) **EP 1 424 800 B1**
(45) Date of publication and mention of the grant of the patent: **11.03.2009**
(21) Application number: 03104399.5
(22) Date of filing: 26.11.2003
(51) Int. Cl.: H04L 1/20, H04L 27/26, H04L 1/00

(54) **Method and apparatus for channel quality metric generation within a packet-based multicarrier modulation communication system**
Verfahren und Gerät zur Erzeugung von einer Kanalqualitätsmasszahl in einem paketbasierten Kommunikationssystem mit Mehrträgermodulation
Procédé et dispositif de génération d'une mesure de qualité de canal dans un système de communication par paquets à modulation multiporteuse

(30) Priority: 26.11.2002 US 429691 P; 24.03.2003 US 395575
(43) Date of publication of application: 02.06.2004
(73) Proprietor: Texas Instruments Incorporated, Dallas, TX 75265 (US)
(72) Inventor: Anim-Appiah, Kofi D., Allen, Texas 75002 (US); Batra, Anuj, Dallas, Texas 75206 (US); Williams, Richard G C., San Diego, California 92129 (US)
(74) Representative: Holt, Michael

(56) References cited:
- EP-A- 1 176 750

## Description

### FIELD OF THE INVENTION

The present invention relates to communication systems for general information transmission, and, more particularly, to a packet-based communication system whose physical layer is based on multicarrier modulation that has channel quality metrics.

### BACKGROUND OF THE INVENTION

The world-wide growth of frequency spectrum efficient communications systems and the enhancement of their performance has increased the number of individual users and data transmission rates for these systems. Packet-based communication systems whose physical layers are based on multicarrier modulation are commonly referred to as OFDM (Orthogonal Frequency Division Multiplexing) or DMT (Discrete MultiTone) systems. The available transmission channel bandwidth within an OFDM system is subdivided into a number of discrete channels or carriers. These channels overlap and are orthogonal to each other. Data is transmitted in the form of symbols that have a predetermined duration and encompass some number of carrier frequencies. Systems in compliance with IEEE 802.11a and 802.11g wireless LAN standards are well-known examples of such systems.

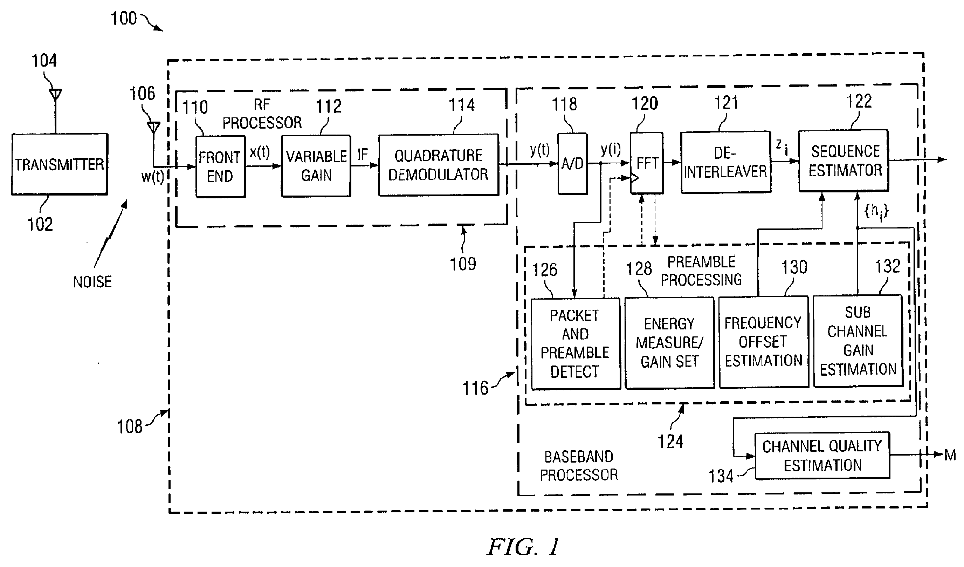

The conventional structure of packets in a packet-based data transmission system, as shown in Figure 1, comprises a preamble, a header, and a data payload. The preamble is typically used to estimate the channel impulse response, derive settings for the automatic gain control circuits, and perform carrier frequency offset correction. It is also used for synchronization and other physical layer functions. The header is typically used for conveying information about variable physical layer parameters such as the size of the data payload and the type of modulation being employed for a particular packet.

Transmission properties, in general, and the impulse response, in particular, of wireless communication channels are time-varying statistical quantities. These variations in channel conditions are caused by several factors which include but are not limited to relative movement between the transmitter and receiver and movement of objects such as automobiles, people, portable office furniture, etc. in the vicinity of either the transmitter, receiver, or both. An example may include the use of a subscriber terminal within a wireless communication system in an automobile. The quality of the connection is extremely high since the subscriber terminal has a direct visual connection to the antenna of a base station within the system. Next, a truck moves in front of the automobile, blocking the direct visual connection to the antenna. Consequently, the quality of the wireless connection degrades, which is detected by the base station system in connection with channel estimation. Therefore, even when the transmit and receive antennas are both fixed spatially, the channel between them can still vary with time.

In such a wireless data transmission system, these variations in the channel response result in a corresponding variation in the short-term data rate that can be supported by the channel. Thus, the design of most data communication systems enable communication on the wireless channel at different data rates. When the signal-to-noise ratio (SNR) is high for a particular channel, the channel quality is deemed to have good performance. Thereby, higher data rates are used on this specific channel. When the SNR is low, however, channel conditions are poor and, as a result, lower data rates are selected for the specific channel. "Noise" as defined here with respect to the SNR is understood to include receiver thermal noise as well as radio frequency interference (RFI) in the passband of the communication system. These varying data rates for each channel are selected either manually by the user or automatically by the system. In either case, some method and apparatus for estimating channel quality is required.

Channel quality metrics are used to estimate channel quality and thereby vary data rates. Most channel quality metrics are related to or derived from the SNR measured at the receiver in an effort to set the data transmission rates of each channel. A conventional approach uses the average SNR for each channel to calculate the channel quality metric. As a result, either a large number of short packets or a small amount of long packets must be obtained to provide a reliable average SNR. Thus, in many wireless data communication systems, accurate measurement of the received SNR is difficult to achieve over a short period of time.

Moreover, to add to the complexity of the derivation of the SNR, within OFDM-based systems, there are multiple SNRs that correspond to multiple sub-channels within a channel. There are numerous approaches towards the combination or averaging of all the SNRs corresponding to each sub-channel to arrive at one quality metric for a particular channel. Some approaches use either the minimum value or the maximum value of each SNR in lieu of the arithmetic average of all SNRs within a given channel.

In an ideal situation, the channel impulse response remains constant for at least two packet-transmission durations. In this case, the channel is understood to have a coherence time that exceeds the duration of two packets. Accordingly, a receiving station may be able to estimate the channel quality from a received packet and select an appropriate transmission rate for its next transmission back to the station that sent the packet. This scenario, however, relies upon symmetry in the channel conditions between the transmitter and the receiver.

A known approach for derivation of the SNR uses other metrics, such as the packet error rate (PER), where the SNR is assumed to be proportional to the PER. Typically, the operating PER in modern wireless data communication systems is 1%. Thus, a large amount of packets are necessary to measure the operating PER with accuracy. As such, this method of deriving the SNR is time consuming as well.

Other approaches use the Viterbi decoder path metric to estimate the average SNR in IEEE 802.11-type OFDM physical layers. This estimation, however, requires an extensive amount of time to obtain reliable values of the SNR for each channel. Accordingly, the adaptation of data rates with respect to these SNR estimations is slow.

Thus, in order to increase the long-term average data transmission rates on communication systems whose channel impulse response is time-variant, it is necessary to be able to adapt data transmission rates more quickly with respect to changing channel conditions. This requires metrics for which reliable estimates can be obtained quickly. Since most modern packet-based wireless data communication systems support packets of varying length, it is desirable for the fidelity of the computed metrics to be largely independent of packet length. In the alternative, it is desirable for the fidelity to be guaranteed for the smallest expected packet.

The present invention is directed to overcoming, or at least reducing the effects of one or more of the problems set forth above.

European Patent Application No. EP-A-1 176 750 describes a link quality determination unit for determining a quality of a transmission link between the transmitter and receiver of an OFDM transmission system. A first link quality measure determination unit determines a first link quality measure on the basis of a signal power variation or a signal-to-noise variation while a second link quality determination unit calculates a second link quality measure on the basis of an average signal-to-noise ratio based on the noise power and the signal power. The first and second link quality measures are combined into an overall link quality measure.

### SUMMARY OF THE INVENTION

To address the above-discussed deficiencies of channel quality estimation, the present invention teaches a communication system having a channel quality estimation module that determines the channel quality metric utilizing the preamble portion of the packet only. The invention resides in a receiver according to claim 1.

In a preferred embodiment, the baseband processor generates a channel quality metric M for each sub-channel that is proportional to the bit-error rate of each packet, wherein the bit-error rate is derived by deinterleaving the sequence of gain estimation magnitudes, averaging a short predetermined segment of the deinterleaved sequence of gain estimation magnitudes, and detecting the number of times the average falls beneath a predetermined threshold.

In yet another embodiment, the baseband processor generates a channel quality metric M for each sub-channel that is proportional to the bit-error rate of each packet, wherein the bit-error rate is derived from the detection of a sequence of gain estimation magnitudes of low amplitude adjacent to gain estimation magnitudes of moderate amplitude during a predetermined interval.

Advantages of this design include but are not limited to a communication system that transmits data in the form of a packet over a data channel that includes a channel quality estimation module for calculating a channel quality metric using only the preamble portion of the packet. Since it is computed using information in the packet preamble, the computation is independent of the data payload. This results in a consistent variance in the computed metric and also guarantees the quality of the metric even for very short packets. Furthermore, the communication system having such a channel quality metric module provides a timely estimate of channel quality on time-varying channels, making its application an ideal choice for wireless communications. Thus, the reliability of making a channel assessment increases. Additionally, the channel quality metric is simple to compute and, therefore, does not increase the complexity of the receiver design.

These and other features and advantages of the present invention will be understood upon consideration of the following detailed description of the invention and the accompanying drawings.

### BRIEF DESCRIPTION OF THE DRAWINGS

For a more complete understanding of the present invention and the advantages thereof, reference is now made to the following description taken in conjunction with the accompanying drawings in which like reference numbers indicate like features and wherein:
Figure 1 illustrates a communication system in accordance with the present invention;
Figure 2 displays the channel estimation module of the communication system of Figure 1; and
Figure 3 shows an alternate FIR filter for the channel estimation module of Figure 2.

### DETAILED DESCRIPTION OF PREFERRED EMBODIMENTS

The present invention will now be described more fully hereinafter with reference to the accompanying drawings, in which embodiments of the invention are shown. This invention may, however, be embodied in many different forms and should not be construed as limited to the embodiments set for the herein. Rather, these embodiments are provided so that this disclosure will be thorough and complete, and will fully convey the scope of the invention to those skilled in the art.

FIG. 1 depicts a high level block diagram of a radio communications system 100 in which the teachings of the present invention can be utilized. As shown, the radio system 100 includes a radio transmitter 102 having a transmit antenna 104 and a radio receiver 108. The radio receiver 108 includes a receive antenna 106, a radio frequency (RF) processor 109, a baseband processor 116, a deinterleaver 121, and a channel decoder (not shown). Each of these modules may be constructed in accordance with conventional circuit design practices.

Particularly, radio transmitter 102 connects to the transmit antenna 104 to transmit an information signal to receiver 108. Receive antenna 106 connects to front end unit 110 to provide a processed antenna signal x(t). As shown, RF processor 109 includes a front end unit 110, a variable gain unit 112, and a demodulator 114, where the variable gain unit 112 couples between front end unit 110 and demodulator 114. Furthermore, baseband processor 116 includes an analog-to-digital converter (ADC) 118, a Fast Fourier Transform (FFT) unit 120, a sequence estimator 122, a preamble processing unit 124, and a channel quality estimation module 134. More particularly, ADC 118 connects to FFT unit 120 and to the preamble processing unit 124 FFT unit 120 connects to sequence estimation 122 to the deinterleaver 121 to supply FFT sequence Zᵢ of the digital sample signal y_{¡}. In general, FFT unit 120 extracts and demodulates sub-channel symbols from each preamble to be provided to one or all of modules 122, 128, 130 and 132. Preamble processing unit 124 connects to FFT unit 120 to provide control signaling. More particularly, preamble processing unit 124 includes a packet and preamble detect module 126, an energy measure gain set module 128, a frequency offset estimation module 130 and a sub-channel gain estimation module 132. Specifically, packet and preamble detect module 126 connects to control FFT unit 120 by signaling when the beginning of a packet is detected and when the end of a preamble is detected. Energy measure/gain set module 128 provides an energy measurement of the signal y(t). Sequence estimator 122 connects to receive the frequency offset from the frequency offset estimation module 130. Additionally, sub-channel gain estimation module 132 connects to sequence estimator 122 and channel quality estimation module 134 to provide gain estimation hi. Sequence estimator 122 is coupled to deinterleaver 121 which connects to a channel decoder (not shown).

In operation, transmitter 102 transmits an information signal (modulated at a carrier frequency f1) from the transmit antenna 104. The transmitted signal reaches the radio receiver after passing through a propagation medium (e.g., a mobile radio channel). Data is transmitted in the form of packets sent over a data channel during a packet transmission. Each data channel includes a plurality of sub-channels. The packet comprises three distinct portions: a preamble, a header and a data payload portion. Each transmitted signal, as well as noise, are received at the receiver antenna 106 as the received modulated RF signal w(t). The received signal is processed by the RF processor 109 to produce a plurality of partially demodulated baseband signals y(t).

Specifically, the RF processor 109 amplifies, mixes, filters, samples, and quantizes the signal to extract a partially demodulated baseband signal y(t) corresponding to the carrier frequency f₁. Receiver front end unit 110 filters and amplifies the RF signal and converts it to an intermediate frequency (IF) signal x(t). Variable gain unit 112 amplifies the signal x(t) to provide a signal of constant energy to baseband processor 116. Demodulator 114 partially demodulates the signal to provide a partially demodulated baseband signal y(t) to the baseband processor 116 for further demodulation of the received modulated RF signal w(t). While a specific radio frequency processor architecture is provided for purposes of illustration, those skilled in the art will appreciate that other known architectures can be used (e.g., wideband digitization followed by digital channelization).

Through the processing of the preamble, header, and data payload portions of the packet sent, baseband processor 116 measures the energy/power of the signal received, calculates the gain estimation, and calculates the channel quality metric, among various other functions. Specifically, partially demodulated baseband signal y(t) is converted by analog-to-digital by ADC 118. Therein, the partially demodulated baseband signal y(t) is sampled and quantized to yield the discrete-time signal yi. Upon system initiation, preamble processor 124 couples to receive the discrete-time signal yᵢ such that each module 126 - 132 within processor 124 processes the discrete-time signal yᵢ. In a packet-based transmission, it is often necessary to know the beginning of the packet in order to establish proper timing since different portions of the packet are referenced at the beginning of the packet. The preamble is often used for this purpose―it usually contains a specific pattern of modulated symbols of which the receiver 108 is aware. Thus, packet and preamble detect module 126 continually looks for this pattern and when it is found the beginning of a packet is declared. Timing information is then established for the rest of the packet duration.

Upon the detection of the beginning of a packet, preamble processor 124 sends a control signal to FFT unit 120 as a form of notice that a preamble has been received. As stated previously, FFT unit 120 extracts and demodulates sub-channel symbols from the preamble, wherein such information may be provided to one or all of modules 122, 128, 130 and 132 for further processing. In this manner, after a packet has been detected, the preamble is first processed to obtain all the information that is required to process the remainder of the packet (the header and the payload). After system initiation, when the end of the preamble is detected by the preamble processor 124, preamble processor 124 sends another control signal to FFT unit 120 to process the header and data payload portions of the signal yᵢ. Accordingly, FFT unit 120 converts discrete-time signal yᵢ into a corresponding FFT sequence Zᵢ. Sequence estimator 122 processes sequence Zᵢ for further processing known to those skilled in the art. In addition, sequence estimator 122 utilizes some processed variables for preamble processor 124 which also shall be described in detail.

Specifically, within the preamble processor 124, the energy measure and gain set module 128 measures the power of the discrete-time signal yᵢ. Frequency offset estimation module 130 estimates the frequency offset of discrete-time signal yᵢ and relays this information to sequence estimator 122. Sub-channel gain estimation module 132 estimates the gain estimation hᵢ for each sub-channel and relays the gain estimation hᵢ to both the sequence estimator 122 and channel quality estimation module 134 to ensure that, in the subsequent processing of the sequence yᵢ, specific impairments of the wireless channel are compensated for and to calculate a channel quality metric M₂, respectively. The preamble often contains specific symbol patterns that facilitate the estimation of these specific channel impairments. The Viterbi algorithm is used to implement sequence estimator 122 which requires information that is provided by the preamble processing unit 124 as it extracts the binary information from discrete FFT sequence Zᵢ.

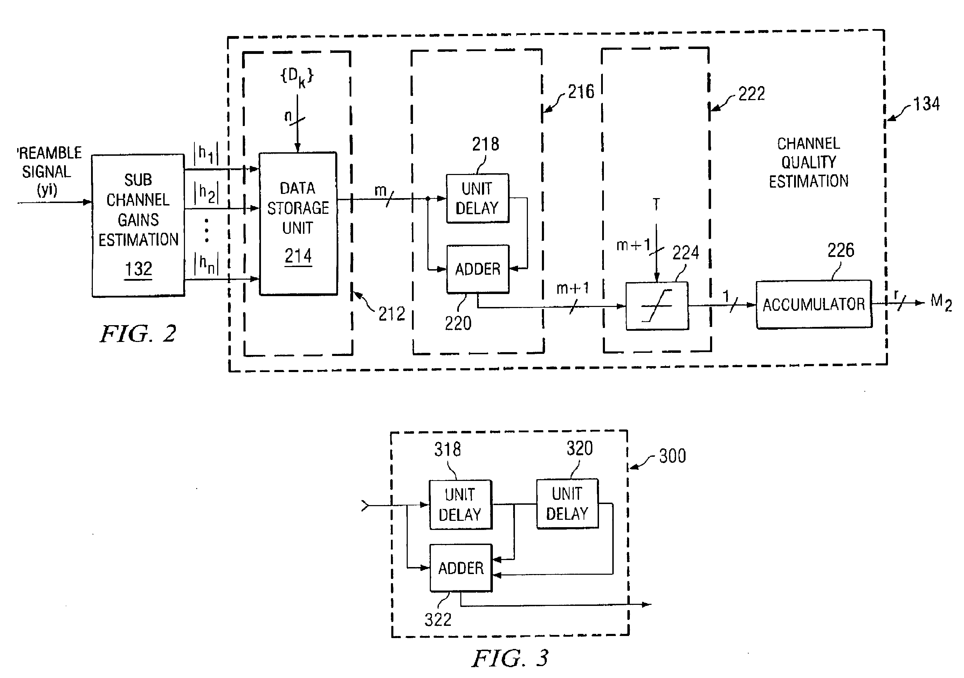

Moreover, as shown in Figure 2, channel quality estimation module 134 couples to receive gain estimation magnitudes {|h₁|, |h₂|, ... |h_{N}|} to perform its calculation of channel quality metric M₂. Channel quality estimation module 134 includes descrambler 212, finite impulse response (FIR) filter 216, comparator 222 and accumulator 226. Descrambler 212 comprises a deinterleaved sequence Dₖ fed into a data storage unit 214. As stipulated, data storage unit 214 couples to receive all of the gain estimation magnitudes {|h₁|, |h₂|, ... |h_{N}|} in parallel. The output of descrambler 212, however, is read out of data storage unit 214 in the predetermined order given by deinterleaved sequence Dₖ. FIR filter 216 may be a low pass filter as shown including unit delay 218 and adder 220. In operation, each gain estimation value in the deinterleaved sequential order is received by unit delay 218 and adder 220. Adder 220 sums the deinterleaved sequence with the delayed deinterleaved sequence to generate a (m+1)-bit sum. Comparator 222 compares a predetermined threshold variable T with the magnitude of each sum. If the sum is less than the predetermined threshold variable T, comparator 222 generates a logic one which is fed to accumulator 226. Each logic one is affectively counted by accumulator 226 to provide the channel quality metric M₂.

In operation, channel quality metric M₂ is computed by processing the sub-channel gain estimation magnitudes {|h₁|, |h₂|, ... |h_{N}|} in three steps. It is intended to characterize the channel quality by enumerating the incidence of runs of low sub-channel gain estimations magnitudes {|h₁|, |h₂|, ... |h_{N}|} when these gains are viewed in a particular order. This is of concern in packet-based multicarrier systems that employ a Viterbi decoder and interleaver for the convolutional code. The premise here is that, when the sub-channel gain estimations magnitudes {|h₁|, |h₂|, ... |h_{N}|} are viewed in the order in which they are used by the Viterbi decoder, a channel which results in a large number of runs of low gain magnitudes is more likely to cause packet errors than one with fewer such runs. Thereby, in an effort to capture the effect of a gain estimation value hᵢ of low magnitude adjacent in decoder sequence to a gain estimation value hᵢ of moderate amplitude, the effect of which may cause data errors, averaging using a short window is implemented using FIR filter 216.

The sub-channel gain estimations {|h₁|, |h₂| ... |h_{N}|} are first computed from the preamble signal as previously described. Descrambler 212 descrambles these N numbers which represents the number of sub-channels having data. Particularly, for systems in compliance with the IEEE 802.11a standard, N equals 48. To implement descrambler 212, the N sub-channel gain estimations {|h₁|, |h₂| ... |h_{N}|} are loaded into memory 214 in parallel. In contrast, these N sub-channel gain estimations {|h₁|, |h₂| ... |h_{N}|} are read out serially in the order designated by the n-bit deinterleave sequence {*Dₖ*}. Thus, the m-bit output is read out synchronously with the rate at which the memory contents is read in, where m is the number of bits used to hold each value of the sub-channel gain. Thus, deinterleave sequence {Dₖ} must be at least log₂(N). The output of descrambler 212 is fed into the FIR filter 216, wherein FIR filter 216 is a low-pass filter representing convolution by [1 1]. Due the implementation of the feedback network in low-pass filter 216, the input to comparator 222 has to be at least (m+1) bits. Comparator 222 outputs a logic one if the sum is larger than threshold T and a logic zero otherwise. Accumulator 226 sums each N-bit sequence to yield a r-bit channel quality metric M₂, where r is at least log₂(N).

The method of generating a channel quality metric according to the present invention includes a first step of deinterleaving the sequence of gain estimation {|h₁|, |h₂|, ... |h_{N}|} to provide a deinterleaved sequence {dᵢ}. The deinterleaver required for this step must be independent of the modulation type corresponding to the data payload. Therefore, a binary phase shift keyed (BPSK) deinterleaver having a block size of 48 may be used on the 48 sub-channel gain estimation magnitudes {|h₁|, |h₂|, ... |h_{N}|} in a system compliant with IEEE standard 802.11a.

In another step, the convolution of the sub-channel gain estimate magnitudes {|h₁|, |h₂|, ... |h_{N}|} with a short window function implemented by FIR filter 216 is derived to obtain the sequence {zᵢ}. The window function may have arbitrary magnitude and may be of arbitrary length, but a effective window function should be relatively short and comprised of samples of approximately equal magnitude. Specifically, an alternative embodiment, may include a length-two averaging window of [0.5 0.5]. Yet another embodiment may include, as shown in Figure 3, a length-three window [α α α] where α is a real number. More particularly, FIR filter 216 may include a first unit delay 318, a second unit delay 320 and an adder 322. In operation, each gain estimation value in the deinterleaved sequential order is received by unit delay 318 and adder 322. Second unit delay 320 couples to receive the first delayed deinterleaved sequence to generate a second delayed deinterleaved sequence. Adder 322 sums the deinterleaved sequence with the first and second delayed deinterleaved sequence to generate a (m+1)-bit sum.

In a third step, accumulator 226 counts the number of times the convolution {Zᵢ} result falls beneath predetermined threshold T. If it were necessary to use a different deinterleaver size from packet to packet, channel quality metric M₂ may be normalized using the size of descrambler 212.

It should be noted that the computation of channel quality metric M₂ may be implemented with operations distinctly different from the three explicit steps described above. It is also possible to compute a metric equivalent to channel quality metric M₂ by operating instead on functions of {hᵢ}. For example, an equivalent metric could be computed beginning using the squared magnitude of the gain estimations {|hᵢ|²} or the logarithm of the gain estimations {log(hᵢ)}.

Though the invention has been illustrated with respect to an OFDM system, those skilled in the art will appreciate that the invention is applicable to any multicarrier system that includes a channel quality estimation component. Furthermore, the present invention can be implemented in systems including direct-sequence code division multiple access (DS-CDMA), frequency hopping, hybrid frequency division multiplex access/ time division multiplex access (FDMA/TDMA), and other components.

The channel quality metric for packet-based multicarrier physical layers have been described with reference to systems compliant with IEEE standards 802.11 a and 802.11 g. Those skilled in the art would recognize that the computation of the channel quality metric in the first and second embodiment should not be limited to such systems having packet-based multicarrier physical layers in systems compliant with IEEE standards 802.11a and 802.11g. The computation and implementation of channel quality metric processing may be implemented in other multicarrier systems. Furthermore, the novel implementation of the two channel quality metric implementations are applicable to both wired and wireless communication systems.

Those of skill in the art will recognize that the physical location of the elements illustrated in Figures 1 and 2 can be moved or relocated while retaining the function described above.

Advantages of this design include but are not limited to a communication system that transmits data in the form of a packet over a data channel that includes a channel quality estimation module for calculating a channel quality metric computed from information available within the physical layer preamble. Thus, its computation is independent of packet length. This results in a consistent variance in the computed metric and also guarantees the quality of the metric even for very short packets. Thus, the reliability of making a channel assessment increases. Therefore, the implementation of the channel quality metric provides a reliable assessment of the instantaneous channel quality based upon the reception of a single packet. Moreover, the channel quality metric is simple to compute and, therefore, does not increase the complexity of the receiver design. In addition, early channel quality metric generation enables a communication system to power down the receiver 108 for the remainder of the current packet to conserve power if it is determined, from the estimate, that the likelihood of the packet payload being correctly decoded by the sequence estimator is very low.

All the features disclosed in this specification (including any accompany claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The terms and expressions which have been employed in the foregoing specification are used therein as terms of description and not of limitation, and there is no intention in the use of such terms and expressions of excluding equivalents of the features shown and described or portions thereof, it being recognized that the scope of the invention is defined and limited only by the claims which follow.

## Claims

1. A receiver (108) for demodulating interleaved data transmitted in the form of a packet sent over a data channel during a packet transmission, each data channel having a plurality of N sub-channels, and each packet including a preamble comprising a specific pattern of modulated symbols, a header and a data payload, the receiver comprising:
at least one antenna element (106) for receiving a radio frequency, RF, signal and providing a corresponding antenna signal;
a RF processor (109) coupled to the at least one antenna element (106) for processing the antenna signal to provide a plurality of partially demodulated baseband sample signals y(t), each baseband sample signal corresponding to one of the plurality of sub-channels (1-N) and each having a carrier frequency; and
a baseband processor (116) coupled to the RF processor (109), the baseband processor (116) comprising
means (118) for sampling and quantizing the plurality of partially demodulated baseband sample signals y(t) to yield a plurality of discrete-time signals (yᵢ);
a Fast Fourier transform unit (120) for extracting and demodulating sub-channel symbols from the preamble and for producing a discrete FFT sequence (yᵢ) of the header and data payload after the preamble data has been extracted and demodulated ;
preamble processing means (124) comprising means (132) for estimating the magnitude of the gain (|h_{1|}........|h_{N}|) for each sub-channel (1-N) from the extracted preamble symbols;
deinterleaving means (121) for deinterleaving the FFT sequence (yᵢ) of the header and data payload to provide a deinterleaved signal sequence; and
a channel decoder (138) coupled to the deinterleaver (121) to decode the deinterleaved signal sequence,
**characterised in that** the baseband processor (116) further comprises a channel quality estimation module (134) for generating a channel quality metric (M), said module (134) comprising
means (212, 214) for receiving the gain estimation magnitudes (|h₁|.......|h_{N}|) of each of the plurality of N sub-channels in parallel from the preamble processor (124) and for outputting a serial sequence of the sequence of said gain estimates {dᵢ} in an order designated by a predetermined deinterleave sequence {Dₖ} the deinterleave sequence {Dₖ} being at least log₂(N) bits;
means (216) for convolving the serial sequence {dᵢ} of gain estimation magnitudes with a window function comprised of samples of approximately equal magnitude; and
means (226) for detecting the number of times the convolution {zᵢ} falls beneath a predetermined threshold T in order to determine the channel quality metric (M) for the channel.

2. A receiver as recited in claim 1, wherein the packet is an OFDM symbol block.

3. A receiver as recited in claim 1 or claim 2, wherein the RF processor (109) comprises:
a front end module (110) coupled to receive the antenna signal to process the signal;
a variable gain module (112) to receive the processed antenna signal; and
a demodulator (114) coupled to receive the amplified signal to partially demodulate the signal into the plurality of baseband sample signals x(t).

4. The receiver as recited in any preceding claim, wherein the baseband processor (116) further comprises:
a sequence estimator (122) coupled to the FFT unit (120) to receive the discrete FFT sequence of the header and the data payload for error correction when a convolutional encoder is used to transmit the RF signal; and wherein the preamble processing module (124) further comprises:
a packet and preamble detection module (126) arranged to receive the digital baseband sample signal (yᵢ) to detect the beginning of a packet and end of a preamble;
an energy measure and gain set module (128) arranged to measure the power of the digital baseband sample signal (yᵢ); and
a frequency offset estimation module (130) coupled to receive the digital baseband sample signal (yᵢ) to estimate the frequency offset; and wherein
the sequence estimator (122) coupled to the preamble processing module (124) is arranged receive the frequency offset and the gain estimation for error correction of the discrete FFT sequence of the header and the data payload and wherein the preamble processing module (124) is coupled to the FFT unit (120) to send control signals when the beginning of the packet is detected for processing of the preamble and when the end of the preamble is detected for processing of the header and the data payload.

5. The receiver as recited in claim 1, wherein said means in channel quality estimation module further comprises:
a data storage unit (214) to receive the gain estimation magnitudes;
a finite impulse response filter (216) for convolving the serial sequence {dᵢ} of gain estimation magnitudes with a window function comprised of samples of approximately equal magnitude ;
a comparator (222) arranged to compare the convolved result with a predetermined threshold value and to provide a logic value when the convolved result is less than the predetermined threshold value; and
an accumulator (226) coupled to the comparator (222) to add each logic value together as a total count, wherein the total count is the channel quality metric (M2).

6. The receiver as recited in claim 5, wherein the data storage unit (214) is a read-only memory (ROM).

7. The receiver as recited in claim 5 or claim 6, wherein the finite impulse response filter (216) is a low pass filter, comprising:
a unit delay (218) coupled to receive the deinterleaved sequence of gain estimation magnitudes {dᵢ} to provide a delayed sequence;
an adder (220) coupled to receive the deinterleaved sequence of gain estimation magnitudes {dᵢ} and the delayed sequence and arranged to provide a sum to the comparator (222).

8. The receiver as recited in claim 5, claim 6, or claim 7, wherein the finite impulse response filter is a low pass filter, comprising:
a first unit delay (318) coupled to receive the deinterleaved sequence of gain estimation magnitudes {dᵢ} to provide a first delayed sequence;
a second unit delay (320) coupled to receive the first delayed sequence to provide a second delayed sequence; and
an adder (322) coupled to receive the deinterleaved sequence of gain estimation magnitudes {dᵢ}, the first delayed sequence, and the second delayed sequence and arranged to provide a sum to the comparator (222).

## Patentansprüche

1. Ein Empfänger (108) zum Demodulieren verschachtelter Daten, die in Form eines Pakets übertragen werden, das während einer Paket-Übertragung über einen Daten-Kanal gesendet wird, wobei jeder Daten-Kanal eine Mehrzahl von N Unterkanälen besitzt, und wobei jedes Paket eine Präambel enthält, die ein bestimmtes Muster an modulierten Symbolen, einen Kopf und eine Daten-Nutzlast enthält, wobei der Empfänger enthält:
mindestens ein Antennen-Element (106) zum Empfangen eines Funkfrequenz-Signals und zum Bereitstellen eines entsprechenden Antennen-Signals;
einen HF-Prozessor (109), der mit dem mindestens einen Antennen-Element (106) zum Verarbeiten des Antennen-Signals gekoppelt ist, um eine Mehrzahl von teilweise demodulierten Basisband-Abtast-Signalen y(t) bereitzustellen, wobei jedes Basisband-Abtast-Signal einem aus der Mehrzahl von Unterkanälen (1-N) entspricht und jeweils eine Trägerfrequenz besitzt; und
einen Basisband-Prozessor (116), der mit dem HF-Prozessor (109) gekoppelt ist, wobei der Basisband-Prozessor (116) enthält
Mittel (118) zum Abtasten und Quantisieren der Mehrzahl von teilweise demodulierten Basisband-Abtast-Signalen y(t), um eine Mehrzahl von zeitdiskreten Signalen (yᵢ) zu erhalten;
eine Fast-Fourier-Transformationseinheit (120) zum Extrahieren und Demodulieren von Unterkanal-Symbolen aus der Präambel und zum Erzeugen einer diskreten FFT-Sequenz (yᵢ) von Kopf und Daten-Nutzlast, nachdem die Präambel-Daten extrahiert und demoduliert worden sind;
Präambel-Verarbeitungs-Mittel (124), die Mittel (132) enthalten zum Abschätzen der Größe des Gewinns (|h₁|.........|hₙ|), für jeden Unterkanal (1-N) aus den extrahierten Präambel-Symbolen;
Entschachtelungs-Mittel (121) zum Entschachteln der FFT-Sequenz (yᵢ) von Kopf und Daten-Nutzlast, um eine entschachtelte Signal-Sequenz bereitzustellen; und
einen Kanal-Decoder (138), der mit dem Entschachtelungs-Mittel (121) gekoppelt ist, um die entschachtelte Signal-Sequenz zu decodieren,
**dadurch gekennzeichnet, dass** der Basisband-Prozessor (116) weiter ein Kanalqualitäts-Abschätzungsmodul (134) enthält, um eine Kanalqualitäts-Metrik (M) zu erzeugen, wobei das genannte Modul (134) enthält
Mittel (212, 214) zum parallelen Empfangen der Gewinn-Schätzgrößen (|h₁|.........|hₙ|) eines jeden aus der Mehrzahl von N Unterkanälen vom Präambel-Prozessor (124), und zum Ausgeben einer seriellen Sequenz von genannten Gewinn-Schätzungen {dᵢ} in einer Reihenfolge, die von einer vorbestimmten Entschachtelungs-Sequenz {Dₖ} bezeichnet wird, wobei die Entschachtelungs-Sequenz {Dₖ} mindestens log₂(N) Bits beträgt;
Mittel (216) zum Falten der seriellen Sequenz {dᵢ} von Gewinn-Schätzgrößen mit einer Fenster-Funktion, die durch Samples von etwa gleicher Größe gebildet ist; und
Mittel (226) zum Ermitteln der Anzahl von Malen, bei denen die Faltung {zᵢ} unter einen vorbestimmten Grenzwert T fällt, um die Kanal-Qualitäts-Metrik (M) für den Kanal zu bestimmen.

2. Ein Empfänger nach Anspruch 1, in dem das Paket ein OFDM-Symbol-Block ist.

3. Ein Empfänger nach Anspruch 1 oder Anspruch 2, in dem der HF-Prozessor (109) enthält:
ein Vorstufen-Modul (110), das gekoppelt ist, um das Antennen-Signal zu empfangen, um das Signal zu verarbeiten;
ein Variabler-Gewinn-Modul (112), um das verarbeitete Antennen-Signal zu empfangen; und
einen Demodulator (114), der gekoppelt ist, um das verstärkte Signal zu empfangen, um das Signal teilweise in die Mehrzahl von Basisband-Abtast-Signalen x(t) zu demodulieren.

4. Der Empfänger nach irgendeinem vorstehenden Anspruch, in dem der Basisband-Prozessor (116) weiter enthält:
einen Sequenz-Abschätzer (122), der mit der FFT-Einheit (120) gekoppelt ist, um die diskrete FFT-Sequenz des Kopfes und der Daten-Nutzlast für Fehlerkorrektur zu empfangen, wenn ein Faltungs-Encoder verwendet wird, um das HF-Signal zu senden; und in dem das Präambel-Verarbeitungsmodul (124) weiter enthält:
ein Paket- und Präambel-Erkennungs-Modul (126), angepasst, um das digitale Basisband-Abtast-Signal (yᵢ) zu empfangen, um den Anfang eines Pakets und Ende einer Präambel zu erkennen;
ein Energiemess- und Gewinn-Einstell-Modul (128), angepasst, um die Leistung des digitalen Basisband-Abtast-Signals (yᵢ) zu messen; und
ein Frequenzversatz-Abschätzungsmodul (130), das gekoppelt ist, um das digitale Basisband-Abtast-Signal (yᵢ) zu empfangen, um den Frequenzversatz abzuschätzen; und in dem
der Sequenz-Abschätzer (122), der mit dem Präambel-Verarbeitungsmodul (124) gekoppelt ist, angepasst ist, um den Frequenzversatz und die Gewinn-Abschätzung zur Fehlerkorrektur der diskreten FFT-Sequenz des Kopfes und der Daten-Nutzlast zu empfangen, und in dem das Präambel-Verarbeitungsmodul (124) mit der FFT-Einheit (120) gekoppelt ist, um Steuersignale zu senden, wenn der Anfang des Pakets erkannt wird, für die Verarbeitung der Präambel, und wenn das Ende der Präambel erkannt wird, für die Verarbeitung des Kopfes und der Daten-Nutzlast.

5. Der Empfänger nach Anspruch 1, in dem das genannte Mittel im Qualitiäts-Abschätzungs-Modul weiter enthält:
eine Daten-Speicher-Einheit (214), um die Gewinn-Abschätzungsgrößen zu empfangen;
ein Endlicher-Impuls-Reaktionsfilter (216) zum Falten der seriellen Sequenz {dᵢ} von Gewinn-Schätzgrößen mit einer Fenster-Funktion, gebildet durch Samples von etwa gleicher Größe;
einen Komparator (222), angepasst, um das gefaltete Ergebnis mit einem vorbestimmten Grenzwert zu vergleichen und um einen logischen Wert bereitzustellen, wenn das gefaltete Ergebnis geringer ist, als der vorbestimmte Grenzwert; und
einen Akkumulator (226), der gekoppelt ist mit dem Komparator (222), um jeden logischen Wert zu summieren zu einer Gesamtsumme, wobei die Gesamtsumme die Kanal-Qualitäts-Metrik (M2) ist.

6. Der Empfänger nach Anspruch 5, in dem die Daten-Speicher-Einheit (214) ein Nur-Lesen-Speicher (ROM) ist.

7. Der Empfänger nach Anspruch 5 oder Anspruch 6, in dem das Endlicher-Impuls-Reaktionsfilter (216) ein Tiefpass-Filter ist, enthaltend:
eine Einheit-Verzögerung (218), die gekoppelt ist, um die entschachtelte Sequenz von Gewinn-Schätzgrößen {dᵢ} zu empfangen, um eine verzögerte Sequenz bereitzustellen;
einen Addierer (220), der gekoppelt ist, um die entschachtelte Sequenz von Gewinn-Schätzgrößen {dᵢ} und die verzögerte Sequenz zu empfangen, und der angepasst ist, um dem Komparator (222) eine Summe bereitzustellen.

8. Der Empfänger nach Anspruch 5, Anspruch 6 oder Anspruch 7, in dem das Endlicher-Impuls-Reaktionsfilter ein Tiefpass-Filter ist, enthaltend:
eine erste Einheit-Verzögerung (318), die gekoppelt ist, um die entschachtelte Sequenz von Gewinn-Schätzgrößen {dᵢ} zu empfangen, um eine erste, verzögerte Sequenz bereitzustellen;
eine zweite Einheit-Verzögerung (320), die gekoppelt ist, um die erste, verzögerte Sequenz zu empfangen, um eine zweite, verzögerte Sequenz bereitzustellen; und
einen Addierer (322), der gekoppelt ist, um die entschachtelte Sequenz von Gewinn-Schätzgrößen {dᵢ}, die erste, verzögerte Sequenz und die zweite, verzögerte Sequenz zu empfangen, und der angepasst ist, um dem Komparator (222) eine Summe bereitzustellen.

## Revendications

1. Récepteur (108) pour démoduler des données entrelacées transmises sous la forme d'un paquet envoyé sur une voie de transmission de données au cours d'une transmission de paquet, chaque voie de transmission de données ayant une pluralité de N sous-canaux, et chaque paquet incluant un préambule comprenant un motif spécifique de symboles modulés, un en-tête et des données utiles, le récepteur comprenant :
au moins un élément d'antenne (106) pour recevoir un signal radioélectrique, RF, et fournir un signal d'antenne correspondant ;
un processeur RF (109) couplé à l'au moins un élément d'antenne (106) pour traiter le signal d'antenne de manière à fournir une pluralité de signaux d'échantillons de bande de base partiellement démodulés y(t), chaque signal d'échantillon de bande de base correspondant à l'un de la pluralité de sous-canaux (1 - N) et chacun ayant une fréquence porteuse ; et
un processeur de bande de base (116) couplé au processeur RF (109), le processeur de bande de base (116) comprenant :
des moyens (118) pour échantillonner et quantifier la pluralité de signaux d'échantillons de bande de base partiellement démodulés y(t) de manière à obtenir une pluralité de signaux temporels discrets (yᵢ) ;
de manière àune unité de transformation de Fourier rapide (120) pour extraire et démoduler des symboles de sous-canal du préambule, et pour produire une série FFT discrète (yᵢ) de l'en-tête et des données utiles une fois que les données du préambule ont été extraites et démodulées ;
des moyens de traitement de préambule (124) comprenant des moyens (132) pour estimer la grandeur du gain (|h₁| ... |h_{N}|) de chaque sous-canal (1 - N) à partir des symboles de préambule extraits ;
des moyens de désentrelacement (121) pour désentrelacer la série FFT (yᵢ) de l'en-tête et des données utiles de manière à fournir une série de signaux désentrelacée ; et
un décodeur de canal (138) couplé au désentrelaceur (121) de manière à décoder la série de signaux désentrelacée,
**caractérisé en ce que** le processeur de bande de base (116) comprend en outre un module d'estimation de la qualité d'un canal (134) de manière à générer une métrique de qualité de canal (M), ledit module comprenant (134) :
des moyens (212, 214) pour recevoir les grandeurs d'estimation de gain (|h₁| ... |h_{N}|) de chacun de la pluralité de N sous-canaux en parallèle en provenance du processeur de préambule (124) et pour délivrer en sortie une séquence série desdites estimations de gain {dᵢ} dans un ordre indiqué par une séquence de désentrelacement prédéterminée {Dₖ},
la séquence de désentrelacement {Dₖ} étant au moins de log₂(N) bits ;
des moyens (216) pour convoluer la séquence série {dᵢ} des grandeurs d'estimation de gain avec une fonction fenêtre composée d'échantillons de grandeur approximativement égale ; et
des moyens (226) pour détecter le nombre de fois où la convolution {zᵢ} tombe sous un seuil prédéterminé T de manière à déterminer la métrique de qualité de canal (M) du canal.

2. Récepteur selon la revendication 1, dans lequel le paquet est un bloc de symbole OFDM.

3. Récepteur selon la revendication 1 ou la revendication 2, dans lequel le processeur RF (109) comprend :
un module frontal (110) couplé de manière à recevoir le signal d'antenne afin de traiter le signal ;
un module de gain variable (112) pour recevoir le signal d'antenne traité ; et
un démodulateur (114) couplé de manière à recevoir le signal amplifié afin de démoduler partiellement le signal dans la pluralité de signaux d'échantillons de bande de base x(t).

4. Récepteur selon l'une quelconque des revendications précédentes, dans lequel le processeur de bande de base (116) comprend en outre :
un estimateur de série (122) couplé à l'unité FFT (120) de manière à recevoir la série FFT discrète de l'en-tête et des données utiles pour une correction d'erreur quand un codeur convolutionnel est utilisé pour transmettre le signal RF ; et dans lequel le module de traitement de préambule (124) comprend en outre :
un module de détection de paquet et de préambule (126) agencés de manière à recevoir le signal d'échantillon de bande de base numérique (yᵢ) afin de détecter le début d'un paquet et la fin d'un préambule ;
un module de mesure d'énergie et de réglage de gain (128) agencé de manière à mesurer la puissance du signal d'échantillons de bande de base numérique (yᵢ) ; et
un module d'estimation de décalage de fréquence (130) couplé de manière à recevoir le signal d'échantillon de bande de base numérique (yᵢ) pour estimer le décalage de fréquence ; et dans lequel
l'estimateur de série (122) couplé au module de traitement de préambule (124) est agencé de manière à recevoir l'estimation de décalage de fréquence et de gain pour une correction d'erreur de la série FFT discrète de l'en-tête et des données utiles et dans lequel le module de traitement de préambule (124) est couplé à l'unité FFT (120) de manière à envoyer des signaux de commande lorsque le début du paquet est détecté pour le traitement du préambule et lorsque la fin du préambule est détectée pour le traitement de l'en-tête et des données utiles.

5. Récepteur selon la revendication 1, dans lequel lesdits moyens dans le module d'estimation de la qualité d'un canal comprennent en outre :
une unité de stockage de données (214) pour recevoir les grandeurs d'estimation de gain ;
un filtre à réponse impulsionnelle finie (216) pour convoluer la séquence série {dᵢ} des grandeurs d'estimation de gain avec une fonction fenêtre composée d'échantillons de grandeur approximativement égale ;
un comparateur (222) agencé de manière à comparer le résultat convolué à une valeur de seuil prédéterminée et à fournir une valeur logique lorsque le résultat convolué est inférieur à la valeur de seuil prédéterminée ; et
un accumulateur (226) couplé au comparateur (222) de manière à ajouter ensemble chaque valeur logique comme un comptage total, dans lequel le comptage total est la métrique de la qualité d'un canal (M2).

6. Récepteur selon la revendication 5, dans lequel l'unité de stockage de données (214) est une mémoire morte (ROM).

7. Récepteur selon la revendication 5 ou la revendication 6, dans lequel le filtre à réponse impulsionnelle finie (216) est un filtre passe-bas, comprenant :
un retard d'unité (218) couplé de manière à recevoir la séquence désentrelacée des grandeurs d'estimation de gain {dᵢ} afin de fournir une séquence retardée ;
un additionneur (220) couplé de manière à recevoir la séquence désentrelacée des grandeurs d'estimation de gain {dᵢ} et la séquence retardée et agencé de manière à fournir une somme au comparateur (222).

8. Récepteur selon la revendication 5, la revendication 6 ou la revendication 7, dans lequel le filtre à réponse impulsionnelle finie est un filtre passe-bas, comprenant :
un premier retard d'unité (318) couplé de manière à recevoir la séquence désentrelacée des grandeurs d'estimation de gain {dᵢ} afin de fournir une première séquence retardée ;
un second retard d'unité (320) couplé de manière à recevoir la première séquence retardée afin de fournir une seconde séquence retardée ; et
un additionneur (322) couplé de manière à recevoir la séquence désentrelacée des grandeurs d'estimation de gain {dᵢ}, la première séquence retardée et la seconde séquence retardée et agencé de manière à fournir une somme au comparateur (222).
